# EUROPEAN PATENT SPECIFICATION

(11) **EP 3 595 426 B1**
(45) Date of publication and mention of the grant of the patent: **20.04.2022**
(21) Application number: 18717970.0
(22) Date of filing: 14.03.2018
(51) Int. Cl.: A01B 45/02

(54) **GROUND AERATION DEVICE**
BODENBELÜFTUNGSVORRICHTUNG
DISPOSITIF D'AÉRATION DE SOL

(30) Priority: 14.03.2017 GB 201704047; 28.12.2017 GB 201722185
(43) Date of publication of application: 22.01.2020
(73) Proprietor: Knight, Peter, Bury St Edmunds, Suffolk IP29 5PW (GB)
(72) Inventor: Knight, Peter, Bury St Edmunds, Suffolk IP29 5PW (GB)
(74) Representative: ip21 Ltd
(86) International application number: PCT/GB2018/000038
(87) International publication number: WO 2018/167452

(56) References cited:
- EP-A1- 0 430 589
- EP-A2- 0 190 933
- GB-A- 2 144 961
- US-A- 2 072 331
- US-B1- 6 598 683
- US-B1- 6 939 085

## Description

### Technical field

The invention relates generally to ground aeration devices.

### Background

Ground aeration is the process of improving the circulation of air into the soil. Ground aeration devices are known and can provide bursts of air at a subterraneous level, resulting in air pockets. The ground aeration process is desired for a number of uses, including invigorating roots, planting in wet conditions, and reducing the effects of compacted soil. Agronomists and horticulturists emphasize the role oxygen plays in the development of plant life. Ground aeration may also be used for soil drainage, for example, for sport pitches, or other outdoor events.

Known ground aeration devices are pneumatic, including an array of spikes which is driven into the ground and fed from an on-board air compressor which is petrol driven. Such devices usually rely on two-stroke petrol engines to provide air and generally only produce a small amount of air, due in part to their size, but also as a result of their potential power output. Accordingly, the size of the air pockets created below the ground is generally only small. As a result, repeated air blasts are required to provide suitable space to produce drainage release.

Furthermore, current devices are bulky, or at least large and require the aid of a motor to move the device, or a vehicle in order to tow the device. The size of these devices and the generally low air output result in products with low efficiency. US6939085B1, EP0430589A1, GB2144961A, US6598683B1, EP0190933A2, US2072331A each disclose known devices of this type.

In an ideal setting, a favourable device would be small enough to manoeuvre freely, and be constructed so as to accommodate a more powerful air supply means. A ground aeration device would also ideally be able to provide a means for delivering material, be it fertiliser for plant nutrition, or cement for ground support, at a subterranean level with minimal disturbance to the top layer.

It is to these problems, amongst others, that the disclosed device offers a solution.

### Summary

In a comparative example, there is provided a ground aeration device comprising:
an air supply connector for receiving pressurised air from a source;
a supporting element for supporting a drill element for insertion into the ground and
a pneumatic hammer for hammering the drill element into the ground;
a first pneumatic means comprising a first actuating means for actuating the pneumatic hammer; and
a second pneumatic means comprising a second actuating means for controlling supply of the pressurised air through the drill element.

The supporting element is referred to as a 'carriage' for up and down movement, supporting the pneumatic hammer and drill. Advantageously, the device has two pneumatic means, or 'pneumatic circuits' which provides increased power and efficiency compared to known devices. The circuits may be fed from the source, or further, external sources. The device may be small enough to manoeuvre easily, but at the same time accommodates a powerful air supply means by including at least two circuits. It will be appreciated that three or more circuits may be provided, with further actuators and functions. The device is suitable for sequentially driving at least one drill element (i.e. a drill bit) into the soil, injecting air into the soil through the drill element, and then removing the drill bit from the soil.

In a dependent aspect of the comparative example, the supporting element comprises a locking mechanism for locking the supporting element into a first position, wherein the first actuating means is arranged to lock and unlock the locking mechanism. Advantageously, a single pneumatic system (circuit 1) may be used not only for the operation of the pneumatic hammer, but also for safely locking and releasing the supporting element (carriage) to a suitable position to enable drilling into the ground.

In a dependent aspect of the comparative example, the second actuating pneumatic means further comprises at least one pneumatic element for lifting the supporting element. Advantageously, a single pneumatic system (circuit 2) may be used not only for controlling air to be blasted into the ground, but also for safely moving the supporting element (carriage) up and down, to a suitable position to enable drilling into the ground.

In an independent aspect of the invention there is provided a ground aeration device according to claim 1.

In a dependent aspect, the drill element is connected to the pneumatic hammer by a taper fit. The taper fit may be a taper pressure fitting. This attachment means is advantageous over others as it prevents the hammer and drill element to be loose or come apart, particularly because of the vibration incurred by the device in use.

In a dependent aspect, the device comprises at least one stopper for limiting the downward travel of the supporting element. Normally, there are two stoppers at least either side of the device. This is advantageous if the depth of the ground penetration by drill element has to be limited to a specific depth, for example to avoid damaging underground heating pipes, electrical cables or drainage pipes or the like.

In a dependent aspect, the device comprises at least one tensioning element for biasing the drill element downwards. The tensioning element may be one, or, preferably two straps for example. One advantage is to enable extraction of the embedded drill element from the ground, when for example a spring on the pneumatic hammer (boss) maintains a downwards pressure on the drill element, therefore preventing spring travel/elongation.

In a dependent aspect, the first or second pneumatic means is connectable to a supply port for receiving fertiliser or cement based products. Rather than feeding the material through the first or second pneumatic circuits, the material may be advantageously provided from an external source providing flexibility in applications.

In a dependent aspect, the toggle switches are recessed into a manifold of the ground aeration device. The recessed toggle switches are easily accessed by the user and reduce the likelihood of the operator's clothing from coming into contact with and unintentionally activating the switch, which then subsequently activates the pneumatic circuits of the device. A 'manifold' can be a panel located at the top of the frame of the device for example, with air inlets for the device pneumatic circuit.

Advantageously, the device has a second air coupling in addition to the main coupling that feeds the pneumatic means (typically an air hammer) which is attached to a drill bit. This second air coupling is for the purpose of feeding air in from the air generator through the drill bit into the subterranean layer.

In a dependent aspect, the drill element comprises an air deflecting element. This may be an inverted pyramid or cone for example. Advantageously, the drill element includes an air deflector which enables air to be blasted radially into the subterranean layer, resulting in more powerful and efficient ground aeration.

In a dependent aspect, the drill element comprises a plurality of drill tubes and wherein each of the drill tubes comprises the at least one aperture. This increases drilling capacity.

In a dependent aspect, the second air conduit is connectable to a supply port for receiving fertiliser or cement based products and delivery of said products into the ground through the at least one aperture, when the drill element is inserted into the ground. This enables the device to be used for fertilising soil or delivering cement subterraneously for example, providing flexibility in applications

In a dependent aspect, the ground contact foot comprises a ground engagement plate through which the drill element passes, in use.. Advantageously, the ground engagement plate ensures the air penetrates subterraneously, by preventing leaking through the ground incision created by the drill element.

### Brief description of the figures

The present disclosure will now be described with reference to the following figures:
Figure 1 is an elevational frontal side view of the device;
Figure 2 is an elevational top view of the device;
Figure 3 is a side view of the device;
Figure 4 is a frontal view of the device;
Figures 5(a) and 5(b) are schematic, cross sectional, side views of exemplary drill bits of the device;
Figure 6 is a schematic, subterranean, side view of device in use;
Figures 7(a) to (c) respectively show frontal, side and back views of another device; and
Figure 8 shows a pneumatic circuit for the device.

### Detailed description

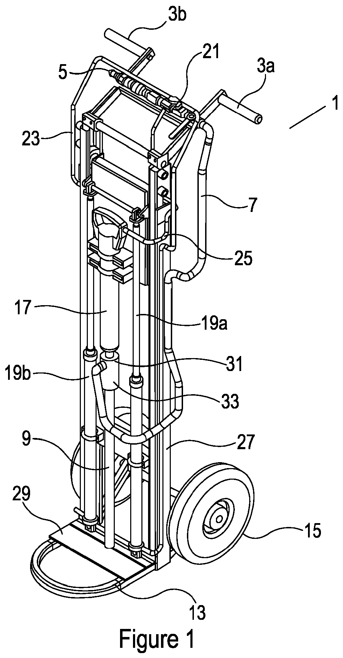

Figure 1 is an elevated side view of the ground aeration device 1. The device 1 has operating handles 3a and 3b, an air supply attachment means 5 and air supply splitter 21. The operating handles 3a, 3b may be used by the user to position the device as well as control air supply.

The air may be provided from an external supply (not shown), connected through a hose at the air supply attachment means 5. The air supplied to the device 1 drives pistons 19a and 19b of the device and may also flow in air bursts into the ground through a drill bit 9. An air supply splitter 21 splits the supply of air into multiple connections. Importantly, air is supplied to the drill bit 9 through at least two connections, feeding into the drill bit: a hammer gun air supply pipe 25 which provides air to operate the drilling of the drill bit 9 into the ground and a second supply pipe 7. Supply pipe 23 supplies air to the hammer gun 17 (also referred to as an air hammer or pneumatic hammer).

In use, the device 1 is positioned at the location at which a burst of air is to be delivered. The operator presses forward on the handles 3a and 3b to ensure the ground contact foot 13 is firmly pressed on to the ground. The operator then activates the hammer gun 17 which plunges the drill bit 9 into the ground, to a depth of about 200mm to 500mm below the base line of the ground contact foot 13. Once at depth, a burst of air is delivered via the second supply pipe 7 connected to the pipe 25 via a coupling device 33.

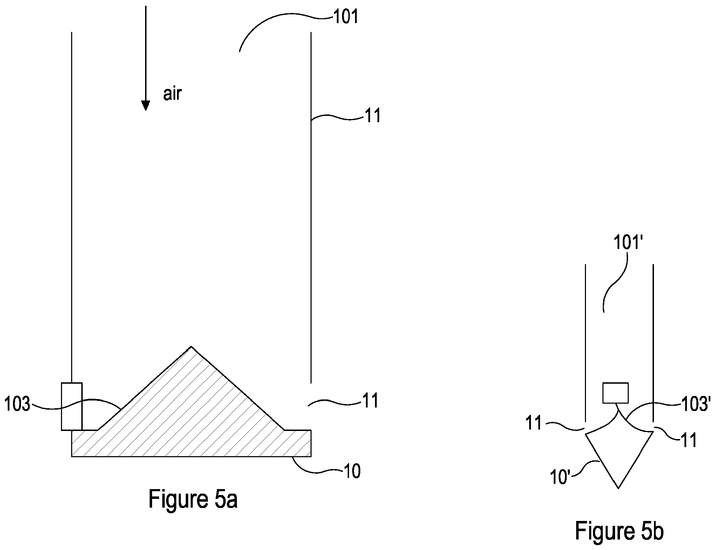

Figure 5(a) shows a drill bit 9 with a flat end 10. The additional air being supplied to the drill bit 9 via the second supply pipe 7 has an internal conduit 101. The air is then deflected by an air deflector 103 through apertures 11 in the drill bit 9. The drill bit or shaft diameter is in the region 13mm to 24mm.

Figure 5(b) shows another example of a drill bit which has a chisel or spike 10' (instead of a blunt end) to aid insertion into the ground. The spike 10' is conical in this example. The air deflector in this example has a cross section with concave sides as may be seen in Figure 5(b). The chisel/spike has a hollow body 101' which extends from the hammer to the chisel end. The chisel end has at least one outlet 11 which vents the compressed air in the in the subterranean area about the embedded chisel end. The hollow body functions as an air chamber which has a centrally placed air deflector (e.g. an inverted conical surface at the chisel end of the chamber), which deflects the compressed air out through the one or more outlets 11 and in to the ground. The inverted conical deflector provides and even distribution of air though the air outlets.

In alternative embodiments, multiple shafts are arranged to cover an increased surface area. For example, the multiple shafts may be arranged in a two-dimensional array with 2 to 5 shafts per dimension. A configuration of multiple drills can be driven by a common air hammer device or independently.

The air that exits the drill bit 9 is provided by a blast of air through the additional coupling 33. A first use for the air supply is to drive the hydraulic press. Advantageously, the air provided for the blast of air to occur at the subterraneous level after a time delay. This allows the hydraulic press to fully submerge the drill bit to its full extension. The air supply splitter 21 directs air flow to the drill bit 9, ensuring a greater level of blast power is supplied to the drill bit 9.

To withdraw the drill bit 9 from the ground, air is supplied to pistons 19a and 19b which drive up, drawing the drill bit 9 out of the ground.

Wheels 15 allow movement of the device 1 by the operator. The operator can freely adjust the positioning of the device 1 and move it to new locations upon delivery of an air pocket, or blister.

The device 1 comprises a frame 27, which the pistons 19a, 19b, hydraulic press 17 and air supply pipes are fastened to. The frame 27 is preferably made of a metal, or other suitable material which would support the vibrations and shocks to which the device is subjected in use.

A ground engagement plate 29 is fastened to the ground engagement foot 13. The drill bit 9 passes through the engagement plate 29 in use. The plate 29 acts to keep the top later of ground in a fixed position, so as to prevent shifting of the ground, or leaking of the air that is released through the drill bit apertures 11.

In a preferred embodiment, the device 1 uses a conventional highways/building merchant's air generator which is conventionally used with a pneumatic road drill. This has an adequate capacity to feed both the coupling for the air hammer, and the delivery of air subterraneously.

The hydraulic press collar 31 is at the base of the hydraulic press 17 and drill bits 9 may be attached to the collar 31. The collar 31 allows for interchangeability of additional drill bit configurations to the device 1. These attachments can include, but are not limited to, a drill bit with a chisel edge, as schematically shown in Figure 5(b), or a drill bit with a flat edge, as schematically shown in Figure 5(a). Further, in an alternative embodiment, a framework may be attached which has an array of devices which feed the second coupling device 33 where the air supply is fed through air pipe 7.

In use, the device 1 delivers a pocket of air in to the ground through the drill bit 9. For a waterlogged pitch or area of grass, the surface water then drains into the newly formed air pocket, or blister. The water replaces the air that is forced into the ground by the device 1, and subsequently is absorbed by the ground across an osmotic gradient. A benefit is that, in addition to draining top surface water, this application also has the effect of reinvigorating grass roots which me be dormant in a heavily compacted soil, therefore it revitalises plant growth in a compacted ground surface.

In an alternative application, device 1 can be used to deliver fertiliser. Delivery of subterraneous fertiliser provides roots with a direct supply of nutrients. A fertiliser delivery pipe is attached (not displayed in the figures) at the second coupling, or linked in to the drill bit air supply pipe 7. The device 1 is positioned and the drill bit 9 plunged in to the ground as with the drainage method disclosed above. Once the drill bit 9 is in the ground, the fertiliser can be spread with the blast of air.

In an alternative application, device 1 can be used for the delivery of subterraneous concrete. An initial air burst is used to create the air pocket and then cement mix powder is supplied with a second burst for example; where necessary, repeated bouts of powder delivery can then be supplied. Advantageously, cementing may be achieved quickly. For example, cement based products may be delivered in this way to stabilise the ground subterranean (i.e. embankments) where slippage could occur.

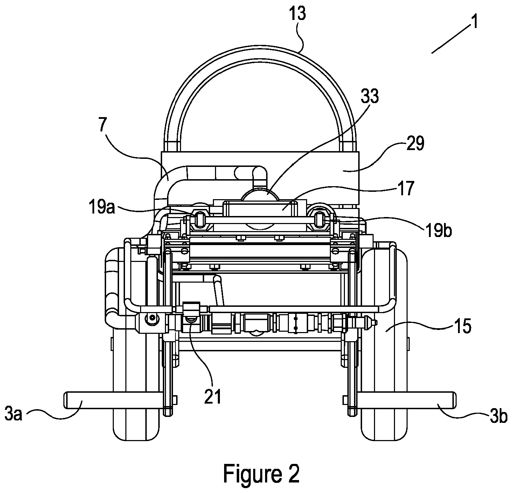

Figure 2 is a top view of the device 1. The air supply attachment 5 and air supply splitter can be viewed forward of the handles 3a, 3b. A control panel activates the pistons, and air burst. The second supply pipe 7 is shown extending from the left of the air supply splitter 21 and joining on to the air coupling device 33 at the front of the device, forward of the hydraulic press 17.

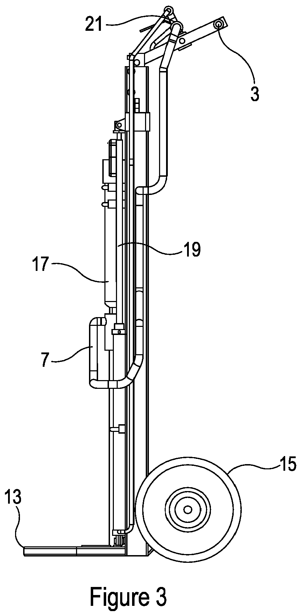

Figure 3 is a side view of device 1. This figure shows the positioning of the handles 3a, 3b above the wheels 15. The profile of the device 1 is preferably constructed to be as thin as possible, by fastening the pistons 19 and hydraulic press 17 to one central device frame 27. This construction advantageously prevents uneven distribution of weight, and ensures the ground contact foot 13 does not require a large profile.

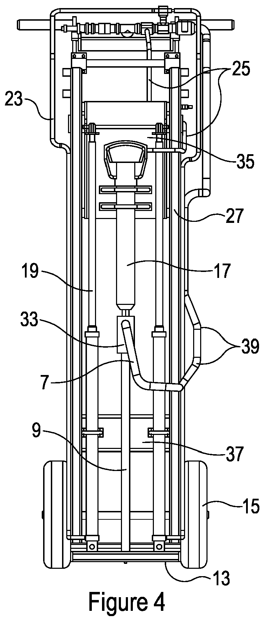

Figure 4 is a frontal view of the device 1, showing the pistons 19a, 19b alongside the hydraulic press 17. The pistons 19a, 19b and hydraulic press 17 are supported at their top by sliding plate 35. Sliding plate 35 is attached to the device frame 27 and is moveable along the height of the frame, to allow the drill bit to extend to about 250mm to 500mm below the depth of the ground contact foot 13. The hydraulic press 17, in use, draws the sliding plate 35 down toward the base of the device 1 frame 27. To draw the drill bit 9 out of the ground, the pistons 19 are activated, driving the sliding plate 35 up the frame 27. The hydraulic press 17 is drawn up with the sliding plate 35 which in turn draws the drill bit 9 out of the ground.

To accommodate the displacement of the drill bit, the second supply pipe 7, attached the second coupling 33, has moveable links 39. The moveable links 39 allow the pipe 7 to move with the downward drive of the drill bit 9, and return to their original position on the frame 27. The pistons 19a, 19b at their lowest point are fixed to the base of the frame 27. This attachment anchors the pistons 19a, 19b to a fixed point, which provides the resistance required to enable the piston to drive the sliding plate 35 upwards. The pistons 19a, 19b are further anchored to a lower piston plate 37. This second anchoring maintains the positioning of the pistons 19, to ensure straight driving of the pistons on the frame 27, and prevent buckling.

As shown in Figure 5(a), the chisel device, or drill bit 9 has an array of apertures, which allows the air being driven down the air conduit 101 from the second coupling device 33 to be released in to the ground, thus creating the air pocket, or blister.

An air deflector 103 is provided within the drill bit 9, attached to, and extending upward from the drill bit base 10. The air deflector 103 is in close proximity to the outlet apertures 11 and deflects the air being driven down the drill bit 9 out through the apertures 11 into the ground. The air deflector 103 may be of a pyramidal shape, cone shape or other suitable shape for deflecting air coming down through the conduit 101, preferably radially outwards into the ground.

The apertures 11 allow the pressurised air to diffuse out of the drill bit 9 internal conduit 101 and into the ground. The drill bit 9 base, in the displayed embodiment, is flat bottomed. Apertures 11 disperse the air out of the drill bit 9 at a number of points on the 360 degree radius of the drill bit, producing a wide pocket of air. It will be appreciated that one or more apertures may be provided in the vicinity of the end of the drill bit in any suitable configuration.

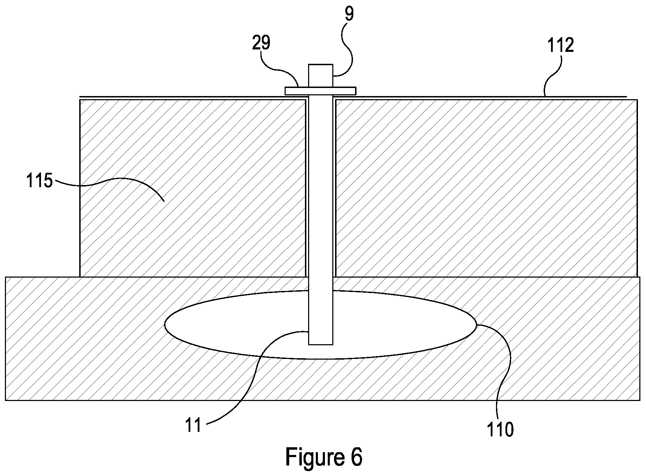

Figure 6 is an in use view of the drill bit 9 creating a pocket, or blister, of air. The blast power of the air that is driven through the drill bit 9 apertures 11 displaces soil and creates a space of air. Ground engagement plate 29 prevents shifting of the ground around the drill bit 9 incision into the ground. Although ground will rise above the air pocket, the ground engagement plate 29 ensures the air penetrates subterraneously, by preventing leaking through the incision created by the drill bit 9.

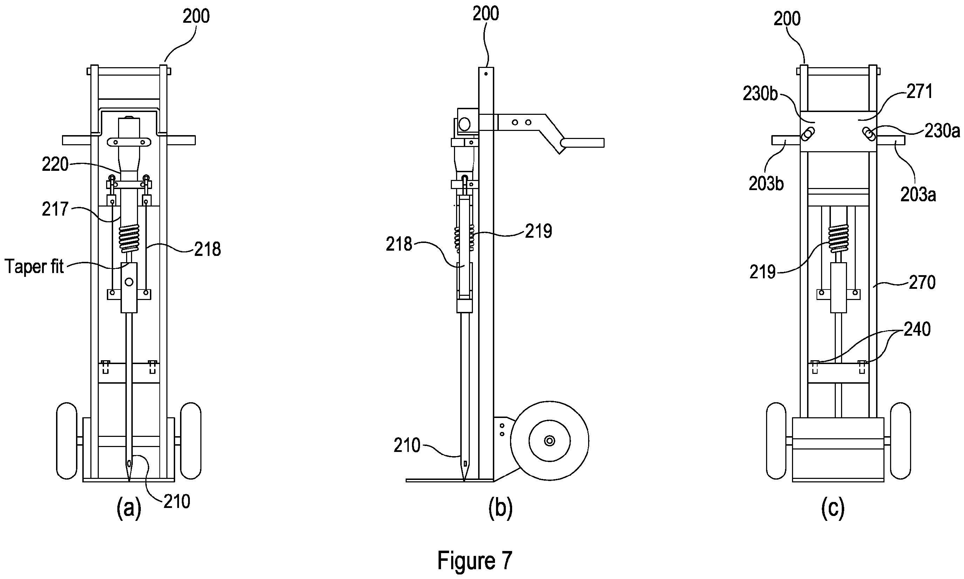

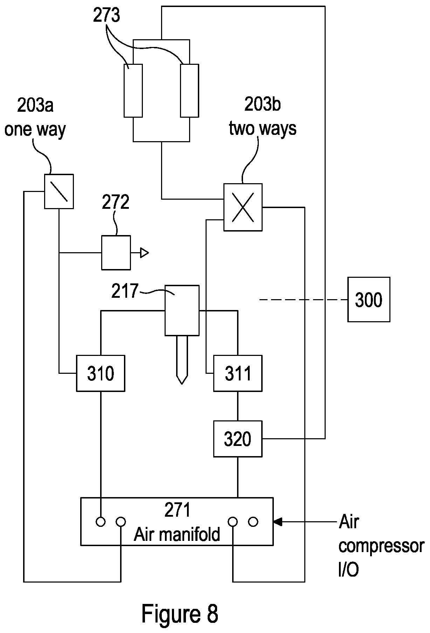

With reference to Figures 7(a) to (c) another device is shown which has similar features with the device described above, with the exception of differences highlighted here. The drill bit in this example is a chisel/spike similar to that shown in Figure 5(b). The drill is connected to the hammer gun 217 by a taper fit (a boss is fitted together on taper pressure fit). The taper provides a simple ruggedized attachment of the two components. The use of the drill keeps on tightening this attachment of these components together. Separation can be achieved by the use of a mallet / hammer for example. This attachment means is advantageous over others as it prevents the components to be loose or come apart because of the vibration incurred by the device. A carriage 220 supports the hammer and drill and is raised and lowered by pneumatic rams. The carriage may have a safety interlocking pin for holding the carriage in place, which may be activated by a pneumatic circuit. The pneumatic operation of the device will be described in more detail with reference to Figure 8. A spring 219 maintains a downwards pressure on the chisel/spike 210.

Straps 218 are located either side of the hammer 217 and are made from a suitable material such as polyester webbing or waxed fabric. The straps 218 are advantageous because in absence of the, the raising of the carriage 220 via pneumatic rams would cause the spring 219 to elongate. This elongation may cause damage to the spring or even the separation of the tapered attachment. Accordingly, the straps are supporting (tensioning) means which enables extraction of the embedded chisel/spike 210 from the ground, while the spring maintains a downwards pressure on the chisel/spike. This prevents spring travel/elongation. Furthermore, the attachment of the straps 218 substantially reduces the vibration induced into the supporting frame 270 of the device by the operation of the hammer 217. This reduction in vibration enables the user to manually handle the device without the need of any anti-vibration (AV) means being employed with the device. Advantageously, an operator can use the device for prolonged periods of time via the handle bars 203a, 203b without incurring discomfort in hands or arms.

Two toggle switches 230a, 230b are inset in a panel 271 (also referred to as a manifold) of the frame for operation of the device. The manifold 271 is located between the handlebars 203a, 203b. The recessed toggle switches 230a, 230b reduce the likelihood of the operator's clothing from coming into contact with and unintentionally activating the switch, which then subsequently activates the pneumatic circuits of the device, which will be described in detail below (e.g. to activate the hammer, the rams or chisel blowing for example).

Mechanical end stops 240 limit the downward travel of the carriage 220, supporting and maintaining the carriage at its lowest position. This is advantageous if the depth of the ground penetration by the chisel/spike 210 has to be limited to a specific depth, for example to avoid damaging underground heating pipes, electrical cables or drainage pipes or the like. The mechanical end stops 240 can be bolts which are rotated until the required limit has been achieved or additional spacers can be attached to the frame which set are set to specific dimension/depths.

The pneumatic operation of the device is now described with reference to Figure 8. The device is operated by the user via the two toggle switches 230a, 230b located on the manifold 271 which spans the handle bars of the device. External compressed air is applied to the device via an inlet 300.

Two pneumatic circuits are connected to outputs from the manifold 271. These are:
∘ Circuit 1, which activates the safety locking pin 272 of the carriage and the pneumatic hammer 217.
∘ Circuit 2, which activates the pneumatic rams 273 for lifting the pneumatic hammer 271 and the blow mechanism for blasting compressed out of the chisel tip through its outlet.

### Circuit 1

In use, the operator operates the first toggle switch 203a (one way = one functional O/P), which then subsequently activates the carriage locking pin 272. Upon pneumatic activation, the pin 272 is withdrawn from the carriage 220, thereby releasing the carriage so that it drops to a position which enables the pneumatic hammer chisel to drill in to the ground.

The activation of the first toggle switch 203a also activates a pneumatic actuator 310, which enables the pneumatic operation of the hammer 217, which is required for drilling into the ground.

### Circuit 2:

In use, the operator operates a second toggle switch 203b (two way = two functional O/Ps), which in a first position enables compressed air to be blown out of the chisel 210 and into the surrounding ground. The compressed air is provided by a regulating valve 320 which regulates the air pressure in this line.

In a second position, the second toggle switch activates a pair of rams 273 which activates actuator 311and lifts the carriage 220 (comprising the hammer 217 and chisel) to an elevated parked position when not in use.

It is the intention of the inventor, to provide a means of supplying an external material 300, such as fertiliser, sand, powder cement etc into the air line which is then subsequently blown out into the ground. Alternatively, the material may be fed into wither of the actuators 310, 311.

## Claims

1. A ground aeration device (200) comprising:
a frame comprising a ground contact foot (13), supporting wheels (15);
an air supply connector for receiving pressurised air from a source;
an air supply splitter for directing air received from the source to a first air conduit and to a second air conduit;
a drill element (210) for insertion into the ground, the drill element being connected to the second air conduit to receive pressurised air for insertion into the ground, the drill element comprising at least one aperture for ejecting the pressurised air;
at least one pneumatic means (217) attached to the frame and connected to the drill element, the at least one pneumatic means being attached to the first air conduit for receiving pressurised air to drive the drill bit in and out of the ground;
and
air control means for controlling the supply of air through the first and second conduits respectively, and ejecting air through the aperture of the drill element when the drill element is inserted into the ground,
**characterised in that** the device further comprises operating handles (3a, 3b),
wherein the at least one pneumatic means is controlled by toggle switches comprised in a manifold (271) located between the operating handles (3a, 3b), and
wherein the ground contact foot (13) engages with the ground, in use, when the drill element (210) is inserted into the ground.

2. A ground aeration device (200) according to claim 1, wherein the drill element comprises an air deflector (103) for deflecting air supplied to the drill element towards the at least one aperture of the drill element.

3. A ground aeration device (200) according to claim 2, wherein the air deflector (103) is an inverted pyramid or cone.

4. A ground aeration device (200) according to any one of the preceding claims, wherein the drill element comprises a plurality of drill tubes and wherein each of the drill tubes comprises the at least one aperture.

5. A ground aeration device (200) according to any one of the preceding claims, wherein the second air conduit is connectable to a supply port for receiving fertiliser or cement based products and delivery of said products into the ground through the at least one aperture, when the drill element is inserted into the ground.

6. A ground aeration device (200) according to any one of the preceding claims, wherein the ground contact foot comprises a ground engagement plate through which the drill element passes, in use.

7. A ground aeration device (200) according to any one of the preceding claims, wherein the drill element is connected to the pneumatic hammer by a taper fit.

8. A ground aeration device (200) according to any one of the preceding claims, further comprising at least one stopper for limiting the downward travel of the supporting element.

9. A ground aeration device (200) according to any one of the preceding claims, further comprising at least one tensioning element for biasing the drill element downwards.

10. A ground aeration device (200) according to any one of the preceding claims, wherein the toggle switches are recessed into the manifold.

## Patentansprüche

1. Eine Bodenbelüftungsvorrichtung (200), die Folgendes umfasst:
einen Rahmen mit einem Bodenkontaktfuß (13), der Räder (15) trägt;
einen Luftversorgungsanschluss zur Aufnahme von Druckluft aus einer Quelle;
einen Luftzufuhrverteiler zum Leiten der von der Quelle empfangenen Luft zu einer ersten Luftleitung und zu einer zweiten Luftleitung;
ein Bohrelement (210) zum Einführen in den Boden, wobei das Bohrelement mit der zweiten Luftleitung verbunden ist, um Druckluft zum Einführen in den Boden aufzunehmen, wobei das Bohrelement mindestens eine Öffnung zum Ausstoßen der Druckluft aufweist;
mindestens ein pneumatisches Mittel (217), das am Rahmen befestigt und mit dem Bohrelement verbunden ist, wobei das mindestens eine pneumatische Mittel an der ersten Luftleitung verbunden ist, um Druckluft zu erhalten, um der Bohrer in den Boden und aus dem Boden zu treiben;
und
Luftsteuerungsmittel zur Steuerung der Luftzufuhr durch die erste bzw. zweite Leitung und zum Ausstoßen von Luft durch die Öffnung des Bohrelements,
wenn das Bohrelement in den Boden eingeführt wird,
**dadurch gekennzeichnet, dass** die Vorrichtung außerdem Bedienungsgriffe (3a, 3b) umfasst, wobei das mindestens eine pneumatische Mittel durch Kippschalter gesteuert wird die in einem Verteiler (271) enthalten ist, der zwischen den Bedienungsgriffen (3a, 3b) angeordnet ist, und wobei der Bodenkontaktfuß (13) im Gebrauch mit dem Boden in Eingriff kommt, wenn das Bohrelement (210) in den Boden eingeführt wird.

2. Bodenbelüftungsvorrichtung (200) nach Anspruch 1, wobei das Bohrelement einen Luftdeflektor (103) zum Ablenken der dem Bohrelement zugeführten Luft in Richtung der mindestens einen Öffnung des Bohrelements umfasst.

3. Bodenbelüftungsvorrichtung (200) nach Anspruch 2, wobei der Luftdeflektor (103) eine umgekehrte Pyramide oder ein umgekehrter Kegel ist.

4. Bodenbelüftungsvorrichtung (200) nach einem der vorhergehenden Ansprüche, wobei das Bohrelement eine Vielzahl von Bohrrohren umfasst und wobei jedes der Bohrrohre die mindestens eine Öffnung aufweist.

5. Bodenbelüftungsvorrichtung (200) nach einem der vorhergehenden Ansprüche, wobei die zweite Luftleitung mit einer Versorgungsöffnung zur Aufnahme von Produkten auf Dünger- oder Zementbasis und zur Abgabe dieser Produkte in den Boden durch die mindestens eine Öffnung verbunden werden kann, wenn das Bohrelement in den Boden eingeführt wird.

6. Bodenbelüftungsvorrichtung (200) nach einem der vorhergehenden Ansprüche, wobei der Bodenkontaktfuß eine Bodeneingriffsplatte umfasst, durch die das Bohrelement im Gebrauch passiert.

7. Bodenbelüftungsvorrichtung (200) nach einem der vorhergehenden Ansprüche, wobei das Bohrelement mit dem Presslufthammer durch eine Kegelpassung verbunden ist.

8. Bodenbelüftungsvorrichtung (200) nach einem der vorhergehenden Ansprüche, die ferner mindestens einen Stopper zur Begrenzung der Abwärtsbewegung des Stützelements umfasst.

9. Bodenbelüftungsvorrichtung (200) nach einem der vorhergehenden Ansprüche, ferner umfassend mindestens ein Spannelement zum Vorspannen des Bohrelements nach unten.

10. Bodenbelüftungsvorrichtung (200) nach einem der vorhergehenden Ansprüche, wobei die Kippschalter in den Verteiler eingelassen sind.

## Revendications

1. Dispositif d'aération du sol (200) comprenant :
un châssis comprenant un pied en contact avec le sol (13), supportant des roues (15) ;
un connecteur d'alimentation en air destiné à recevoir de l'air sous pression provenant d'une source ;
un séparateur d'alimentation en air pour diriger l'air reçu de la source vers un premier conduit d'air et vers un deuxième conduit d'air ;
un élément de forage (210) destiné à être inséré dans le sol, l'élément de forage étant relié au deuxième conduit d'air pour recevoir de l'air sous pression pour l'insertion dans le sol, l'élément de forage comprenant au moins une ouverture pour éjecter l'air sous pression ;
au moins un moyen pneumatique (217) fixé au châssis et relié à l'élément de forage, l'au moins un moyen pneumatique étant fixé au premier conduit d'air pour recevoir de l'air sous pression afin d'enfoncer le trépan dans le sol et de l'en extraire ;
et
des moyens de contrôle de l'air pour contrôler l'alimentation en air à travers le premier et deuxième réseau de distribution d'air respectivement, et éjecter de l'air à travers l'ouverture de l'élément de forage lorsque l'élément de forage est inséré dans le sol,
**caractérisé en ce que** le dispositif comprend en outre des poignées de commande (3a, 3b), dans lequel l'au moins un moyen pneumatique est commandé par des interrupteurs à bascule compris dans un collecteur (271) situé entre les poignées de commande (3a, 3b), et dans lequel le pied en contact avec le sol (13) s'engage avec le sol, en utilisation, lorsque l'élément de forage (210) est inséré dans le sol.

2. Dispositif d'aération du sol (200) selon la revendication 1, dans lequel l'élément de forage comprend un déflecteur d'air (103) pour dévier l'air fourni à l'élément de forage vers la au moins une ouverture de l'élément de forage.

3. Dispositif d'aération du sol (200) selon la revendication 2, dans lequel le déflecteur d'air (103) est une pyramide ou un cône inversé.

4. Dispositif d'aération du sol (200) selon l'une quelconque des revendications précédentes, dans lequel l'élément de forage comprend une pluralité de tubes de forage et dans lequel chacun des tubes de forage comprend la au moins une ouverture.

5. Dispositif d'aération du sol (200) selon l'une quelconque des revendications précédentes, dans lequel le deuxième conduit d'air peut être relié à un orifice d'alimentation pour recevoir des produits à base d'engrais ou de ciment et délivrer lesdits produits dans le sol à travers la au moins une ouverture, lorsque l'élément de forage est inséré dans le sol.

6. Dispositif d'aération du sol (200) selon l'une quelconque des revendications précédentes, dans lequel le pied en contact avec le sol comprend une plaque de mise en prise avec le sol à travers laquelle passe l'élément de forage, en cours d'utilisation.

7. Dispositif d'aération du sol (200) selon l'une quelconque des revendications précédentes, dans lequel l'élément de forage est relié au marteau pneumatique par un ajustement conique.

8. Dispositif d'aération du sol (200) selon l'une quelconque des revendications précédentes, comprenant en outre au moins un bouchon pour limiter le déplacement vers le bas de l'élément de support.

9. Dispositif d'aération du sol (200) selon l'une quelconque des revendications précédentes, comprenant en outre au moins un élément de serrage pour solliciter l'élément de forage vers le bas.

10. Dispositif d'aération du sol (200) selon l'une quelconque des revendications précédentes, dans lequel les interrupteurs à bascule sont encastrés dans le collecteur.
